Europäisches Patentamt

European Patent Office

Office européen des brevets

(11) Publication number: **0 682 083 A2**

# EUROPEAN PATENT APPLICATION

(21) Application number: **95201192.2**

(22) Date of filing: **09.05.95**

(51) Int. Cl.6: **C08L 69/00**, C08J 5/18

(30) Priority: **11.05.94 BE 9400492**

(43) Date of publication of application:
**15.11.95 Bulletin 95/46**

(84) Designated Contracting States:
**AT BE CH DE DK ES FR GB IT LI NL SE**

(71) Applicant: **DSM N.V.**
**Het Overloon 1**
**NL-6411 TE Heerlen (NL)**

(72) Inventor: **Frusch, Johannes Maria**
**Koningstraat 86**
**NL-6121 HT Born (NL)**
Inventor: **Guns, Johannes Jacobus**
**Kasteel Hillenraadweg 14 D**
**NL-6222 XW Maastricht (NL)**

(54) **Light-transmitting sheets containing polycarbonate.**

(57) A light-transmitting sheet consisting of:
a. 100-0 parts by weight of polycarbonate
b. 0-100 parts by weight of bromine-containing polycarbonate
c. 0-20 parts by weight of a bromine-containing flame-retardant additive
d. 0-1 part by weight of a flame-retardant salt,
with:
the sum of components a and b being 100 parts by weight,
b and c having such values that the sheet contains at most 18 wt.% bromine and,
if the sheet contains less than 0.5 wt.% bromine, at least 0.01 part by weight of d is present
e. 0.05-1 part by weight of polytetrafluoro ethylene and, optionally,
f. minor amounts of stabilizers, processing aids, colourants and/or pigments.
The sheet has good fire retardancy properties and a high luminous transmittance.

EP 0 682 083 A2

Rank Xerox (UK) Business Services
(3.10/3.09/3.3.4)

The invention relates to a light-transmitting sheet containing polycarbonate.

Light-transmitting sheets containing polycarbonate are known, for example, from Kunststoff Handbuch 3/1, Hanser Verlag, Munich, Germany, 1992, pp. 279-281.

Sheet in this application is understood to mean a body the length and width of which are large relative to the thickness. The sheets may be single-wall, twin-wall or multi-wall sheets. The sheets may for example be used as glazing for buildings, hothouses, noise barriers, etc. Sheets are not understood to mean test samples. With light-transmitting sheets is meant sheets having a light transmission of at least 75%, measured on single-wall sheets having a wall thickness of 1 mm.

A drawback of the known light-transmitting sheets containing polycarbonate is the insufficient flame retardancy of the sheets. For building applications it is very important that the sheets have an M1 classification, determined by means of the epiradiateur test according to NF P 92-501, as described in International Plastics Flammability Handbook, Hanser Verlag, Munich, 1983, pp. 126-128. The epiradiateur test is a test conducted to determine fire performance aspects such as flame flashover time, flame height and temperature development.

The invention aims to provide a sheet containing polycarbonate andhaving the M1 classification according to the epiradiateur test while still being light-transmitting.

The object of the invention is surprisingly achieved in that the sheet consists of:

a. 100-0 parts by weight of polycarbonate

b. 0-100 parts by weight of bromine-containing polycarbonate

c. 0-20 parts by weight of a bromine-containing flame-retardant additive

d. 0-1 part by weight of a flame-retardant salt,

with:

the sum of components a and b being 100 parts by weight,

b and c having such values that the sheet contains at most 18 wt.% bromine, and

if the sheet contains less than 0.5 wt.% bromine, at least 0.01 part by weight of d is present

e. 0.05-1 part by weight of polytetrafluoro ethylene and, optionally,

f. minor amounts of stabilizers, processing aids, colourants and/or pigments.

The sheet according to the invention has the M1 classification according to the epiradiateur test, even when the sheet's wall thickness is relatively high, and still the luminous transmittance of the sheet is not or hardly inferior to that of the known sheets.

A further advantage is that surface irregularities, such as scratches, are less conspicuous in the sheet according to the invention than in the known sheets.

Polymer compositions containing polycarbonate and possessing flame retardancy properties are known, but these polymer compositions are not or highly insufficiently light-transmitting or their fire performance is only slightly improved, so that the polymer compositions cannot be used in the sheets according to the invention. Furthermore, of a large number of polycarbonate-containing polymer compositions with flame retardancy properties the luminous transmittance and the results of the epiradiateur test are not even known.

EP-A-131751, for example, describes a polymer composition which contains polycarbonate, a bromine-containing fire-retardant additive and polytetrafluoro ethylene. However, the polymer composition also contains components, for example an antimony compound, that nullify the luminous transmittance. The polymer composition can be used for housings of domestic appliances or for cladding panels for use in the building construction sector. These are applications in which non-light-transmitting polymer compositions are used.

Kunststoff Handbuch 3/1, Hanser Verlag, Munich, Germany, 1992, pages 151 and 152, describes how a polycarbonate composition having a somewhat improved fire retardancy is obtained if the composition contains certain salts such as alkaline or earth alkaline sulphonates and, optionally, halogenated compounds. It is also described, however, that though the flame retardancy properties are improved further by addition of polytetrafluoro ethylene, this causes the polymer composition to lose its luminous transmittance. No indication is given of the possibility to obtain an M1 classification according to the epiradiateur test.

DE-C-2211826 describes a polymer composition containing polycarbonate, brominated polycarbonate and polytetrafluoro ethylene. The polymer composition exhibits reduced drip behaviour in the flammability test according to Underwriters Laboratory Bulletin 94, measured on specimens. However, it cannot be concluded from the patent specification that it is possible to obtain the sheet according to the invention, with an M1 classification according to the epiradiateur test and with good luminous transmittance.

DE-A-2948439 describes a polymer composition containing polycarbonate, a flame-retardant salt, a partly fluorinated polyolefine and optionally polytetrafluoro ethylene. The polymer composition can be used to obtain flame-retardant and light-transmitting sheets. The sheets however always contain a partly fluorinated polyolefine. Luminius transmittance achieved is not higher than 63.3%.

Suitable polycarbonates for use in the sheet according to the invention are aromatic polycarbonates and block copolymers containing aromatic and aliphatic polycarbonate blocks. Use can further be made of linear and branched polycarbonates.

Such polycarbonates and their preparation are described in, for example, Kunststoff Handbuch, Hanser Verlag, Munich, Germany, 1992, pp. 118-148.

The polycarbonate can contain monomer units derived from an alcohol with three or more hydroxyl groups, so that the polycarbonate is branched. Branched polycarbonates have advantageous rheological properties, making the branched polycarbonates highly suitable for the manufacture of light-transmitting sheets having good optical properties. The polycarbonate preferably contains monomer units derived from bisphenol A.

The aromatic polycarbonates can be prepared in the customary manner by conversion of a bivalent phenol with a carbonate pre-product according to an interfacial polymerization process as described in, for example, WO-A-94/01494.

In principle, any bromine-containing, flame-retardant additive or bromine-containing polycarbonate is suitable for use in the sheets according to the invention.

Preferably, use is made of a bromine-containing polycarbonate, so that the sheet consists of:

a. 100-0 parts by weight of polycarbonate

b. 0.5-100 parts by weight of bromine-containing polycarbonate,

with:

the sum of components a and b being 100 parts by weight,

b having such a value that the sheet contains 0.5-18 wt.% bromine

e. 0.05-1 part by weight of polytetrafluoro ethylene and, optionally,

f. minor amounts of stabilizers, processing aids, colourants and/or pigments.

Preferably, a bromine-containing polycarbonate is used. This ensures that the equipment used to produce the sheet is less easily fouled.

As bromine-containing polycarbonate use is preferably made of a polycarbonate containing a brominated bisphenol A, preferably tetrabromo bisphenol A, more preferably 3,3',5,5' tetrabromo bisphenol A.

Examples of bromine-containing additives that can be used in the sheet according to the invention are decabromo diphenyl ether, octabromo diphenyl, octabromo diphenylether, trichlorotetrabromo toluol and tetrabromo bisphenol A.

As bromine-containing flame-retardant additive use is preferably made of an oligomer of a brominated bisphenol A, preferably tetrabromo bisphenol A, more preferably 3,3',5,5'-tetrabromo bisphenol A and phosgene. The sheet according to the invention preferably contains 1.5-8 wt.% bromine. This yields good results in the epiradiateur test as well as a good thermal stability.

Examples of salts that are suitable for use in the sheets according to the invention are alkaline and earth alkaline sulphonates, aromatic sulphonamide salts, perfluoroborates, crown ether salts, calcium titanates and sodium aluminium hexafluoride.

Suitable polytetrafluoro ethylenes for use in the sheets according to the invention are polymers having a fluorine content of between 65 and 76 wt.%, preferably of between 70 and 76 wt.%, as described in EP-A-131751. The polytetrafluoro ethylene can be added for example as an aqueous emulsion or in the form of a finely ground powder. The polytetrafluoro ethylene is preferably added as an aqueous emulsion, for in that way the highest luminous transmittance is achieved.

The stabilizers, the processing aids, the colourants and the pigments which the sheet according to the invention can contain are known to one skilled in the art.

Examples of suitable thermal stabilizers are phosphites and phenolic antioxidants. Examples of suitable UV stabilizers are benzotriazoles. As processing aids use can be made for example of lubricants and plasticizers. It is also possible for the sheets to contain colourants and minor amounts of pigment. This of course subject to the condition that the luminous transmittance of the sheet is maintained at a sufficiently high level.

The polymer composition from which the sheet according to the invention is manufactured is preferably kneaded by means of a continuous kneader, for instance a co-rotating twin-screw kneader, as supplied by W&P (TM), Germany, or a Buss (TM) Ko-kneader. This gives the sheets according to the invention an even higher luminous transmittance. It is possible, for example, for the sheets to have a luminous transmittance of at least 80%.

The sheets can be manufactured in the known way using an extruder provided with an extruder head and downstream equipment for the manufacture of single-wall, twin-wall or multi-wall sheets. It is also possible to effect kneading and sheet extrusion by means of one single co-rotating twin-screw kneader equipped with an extruder head for sheet manufacture or by means of an installation comprising the co-rotating twin-screw kneader or a Buss Ko-kneader and a single-screw kneader which receives the kneaded melt from the twin-screw kneader or the Ko-kneader and which is provided with an extruder head for sheet manufacture.

It is also possible for the sheets to have a thin surface layer, for instance having a thickness of between 5 and 100 $\mu$m. The surface layer can be applied, for example, by means of a coextruder or for example by glueing or melting a film onto the sheet.

The sheets can further be processed into end products such as glazing of buildings and noise barriers, cupolas, glazing for bill boards, protective lamp shades, etc. by means of cutting and, optionally, deep drawing.

The invention will be explained on the basis of the examples, without being limited thereto.

## Materials used

- PC: polycarbonate that has been polymerized entirely from bisphenol A and phosgene by the interfacial polymerization process. The limiting viscosity number (LVN), measured in dichloromethane at 20°C according to ISO 1628, was 60 ml/g.
- PC-Br: polycarbonate that has been polymerized from bisphenol A, 3,3,'5,5' tetrabromo bisphenol A and phosgene by the interfacial polymerization process. The LVN was 52 ml/g. The bromine content was 8 wt.%.
- Br oligomer: BC 52 (TM), a bromine-containing oligomer of bisphenol A and phosgene, supplied by Great Lakes Chem. Corp, USA.
- $Na_3AlF_6$: sodium aluminium hexafluoride.
- $C_4F_9SO_3K$: potassium perfluorobutane sulphonate.
- Teflon: Teflon 30N (TM) an aqueous polytetrafluoro ethylene emulsion with a solids content of 60 wt.%, supplied by Dupont, USA.

## Tests

Epiradiateur test according to NF P 92-501. Luminous transmittance according to ASTM D1003. UL 94 according to Underwriters Laboratory Bulletin 94.

## Examples I and II, comparative experiments A and B

Dry blends were produced by mixing PC, PC-BR or one of the flame-retardant additives and polytetrafluoro ethylene in a high-speed mixer. The dry blends were processed into granulate using a co-rotating twin-screw kneader, type ZSK (TM) 30, supplied by W&P, Germany.

The granulate was processed into sheeting having a width of 50 cm and a thickness of 1, 2, 3 and 4 mm using a standard single-screw extruder equipped with a coat hanger die for sheet extrusion.

On the 1 mm sheets the luminous transmittance was measured. The 3 mm sheets were subjected to the UL 94 test. The epiradiateur test was conducted on the sheets having a thickness of 2, 3 and 4 mm.

The compositions of the sheets and the results are presented in table 1.

4

T A B L E 1

| Example Comp. Exp. | Composition (parts) | Bromine content (wt.%) | Luminous transmittance (%) | UL 94 | Epiradiateur test sheet thickness | | |
|---|---|---|---|---|---|---|---|
| | | | | | 2 mm | 3 mm | 4 mm |
| I | 63.50 PC<br>37.50 PC-Br<br>0.18 Teflon | 3 | 84 | V-0 | M1 | M1 | M1 |
| II | 25 PC<br>75 PC-Br<br>0.18 Teflon | 6 | 86 | V-0 | M1 | M1 | M1 |
| A | 100 PC<br>0.06 $C_4F_9SO_3K$ | – | 87 | V-0 | M3 | M4 | M4 |
| B | 25 PC<br>75 PC-Br | 6 | 89 | V-0 | M2 | M3 | M3 |

Examples III and IV, comparative experiments C and D

Dry blends and granulate were prepared as in the above examples and comparative experiments. In addition, the granulate was processed into a twin wall sheet containing partition walls and having a sheet thickness of 6 mm, a wall thickness of 1 mm, and a distance between the partition walls of 6 mm. The luminous transmittance was determined, the UL 94 and the epiradiateur test were conducted. The compositions of the sheets and the results are presented in Table 2.

T A B L E  2

| Example Comp. Exp. | Composition (parts) | Bromine content (wt.%) | Luminous transmittance (%) | UL 94 | Epiradiateur test |
|---|---|---|---|---|---|
| III | 63.50 PC<br>37.50 PC-Br<br>0.18 Teflon | 3 | 84 | V-0 | M1 |
| IV | 25 PC<br>75 PC-Br<br>0.18 Teflon | 6 | 86 | V-0 | M1 |
| C | 25 PC<br>75 PC-Br | 6 | 89 | V-0 | M3 |
| D | PC | – | 90 | V-2 | M3 |

## Claims

1. Light-transmitting sheet containing polycarbonate, characterized in that the sheet consists of
   a. 100-0 parts by weight of polycarbonate
   b. 0-100 parts by weight of bromine-containing polycarbonate
   c. 0-20 parts by weight of a bromine-containing flame-retardant additive
   d. 0-1 part by weight of a flame-retardant salt,
   with:
   the sum of components a and b being 100 parts by weight, b and c having such values that the sheet contains at most 18 wt.% bromine, and, if the sheet contains less than 0.5 wt.% bromine, at least 0.01 part by weight of d is present
   e. 0.05-1 part by weight of polytetrafluoro ethylene and, optionally,
   f. minor amounts of stabilizers, processing aids, colourants and/or pigments.

2. Light-transmitting sheet according to claim 1, characterized in that a branched polycarbonate is used as polycarbonate.

3. Light-transmitting sheet according to claim 1 or claim 2, characterized in that the polycarbonate contains monomer units derived from bisphenol A.

4. Light-transmitting sheet according to any one of claims 1-3, characterized in that the sheet consists of:
   a. 100-0 parts by weight of polycarbonate
   b. 0-100 parts by weight of bromine-containing polycarbonate,
   with:
   the sum of components a and b being 100 parts by weight,
   b having such a value that the sheet contains 0.5-18 wt.% bromine
   e. 0.05-1 part by weight of polytetrafluoro ethylene and, optionally,
   f. minor amounts of stabilizers, processing aids, colourants and/or pigments.

5. Light-transmitting sheet according to any one of claims 1-4, characterized in that the bromine-containing polycarbonate contains brominated bisphenol A.

6. Light-transmitting sheet according to claim 5, characterized in that 3,3',5,5'-tetrabromo bisphenol A is used as bisphenol A.

7. Light-transmitting sheet according to any one of claims 1-6, characterized in that the polytetrafluoro ethylene has a fluorine content of between 65 and 76 wt.%.

8. Light-transmitting sheet according to any one of claims 1-6, characterized in that the polytetrafluoro ethylene has been added in the form of an aqueous emulsion.

9. Light-transmitting sheet according to any one of claims 1-7, characterized in that the plastics composition of which the sheet consists has been kneaded using a continuous kneader.

10. End products manufactured from the light-transmitting sheet according to any one of claims 1-9.

11. Light-transmitting and frame retardant sheet, containing polycarbonate, with a luminous transmittance according to ASTM D1003 of at least 75% and a M1-classification in the epiradiateur test according to NF P 92-501.